# EUROPEAN PATENT APPLICATION

(11) **EP 4 734 521 A1**
(43) Date of publication of application: **29.04.2026**
(21) Application number: 24306781.6
(22) Date of filing: 23.10.2024
(51) Int. Cl.: H04N 19/85, H04N 19/117, H04N 19/70

(54) **ADDING ENERGY INFORMATION TO NEURAL NETWORK POST FILTER GROUP SEI MESSAGE**

(71) Applicant: InterDigital CE Patent Holdings, SAS, 75017 Paris (FR)
(72) Inventor: DEMARTY, Claire-Helene, 35520 MONTREUIL LE GAST (FR); BLONDE, Laurent, 35235 THORIGNE-FOUILLARD (FR); AUMONT, Franck, 35770 VERN SUR SEICHE (FR); LE MEUR, Olivier, 35160 TALENSAC (FR); REINHARD, Erik, 35630 HEDE-BAZOUGES (FR)
(74) Representative: Vossius & Partner Patentanwälte Rechtsanwälte mbB

(57) **Abstract**

Video coding may be performed by associating energy information with a neural network post filter group (NNPFG) supplemental enhancement information (SEI) message. For example, a device (e.g., a decoder for video decoding) may receive a bitstream. The device may determine an SEI message from the bitstream. The SEI message may indicate characteristics of an NNPFG and energy information associated with the NNPFG. The device may, e.g., on a condition that the energy information satisfies criteria, decode an image by applying one of more of the NNPF in the NNPFG to one or more image pixel values from the bitstream. The device may send the decoded image for use, for example to a display.

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### BRIEF SUMMARY

Systems, methods, and instrumentalities are disclosed for performing video coding (e.g., encoding and/or decoding) by associating energy information with a neural network post filter group characteristics (NNPFGC) supplemental enhancement information (SEI) message.

In examples, a device (e.g., a decoder for video decoding) may receive a bitstream. The device may determine a message (e.g., an SEI message) from the bitstream. The message may indicate an NNPFG and energy information associated with the NNPFG. The device may, e.g., on a condition that the energy information satisfies criteria, decode an image by applying the NNPFG to one or more image pixel values from the bitstream. The device may send the decoded image to a display.

In examples, a device (e.g., an encoder for video encoding) may receive an image. The device may determine an NNPFG. The device may encode a bitstream with the image. The device may determine energy information associated with the NNPFG. The device may determine a message (e.g, an SEI message) for the bitstream. The message may indicate the NNPFG characteristics and the energy information. The device may insert the message into the encoded bitstream.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 illustrates an example of an implementation at the encoder side to determine energy information related to a group of NNPFs and insert the determined energy information in an NNPFGC SEI message in a bitstream.
FIG. 5 illustrates an example of an implementation at the decoder side to receive energy information associated with application of a group of NNPFs in an NNPFGC SEI message in a bitstream and to utilize the energy information to determine whether to apply the group of NNPFs.
FIG. 6 illustrates an example of an implementation at the decoder side to receive energy information associated with application of a group of NNPFs in an NNPFGC SEI message in a bitstream and to utilize the energy information to determine whether to apply the group of NNPFs.
FIG. 7 illustrates an example of an implementation at the decoder side to receive energy information associated with application of a group of NNPFs in an NNPFGC SEI message in a bitstream and to utilize the energy information to determine whether to apply the group of NNPFs.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

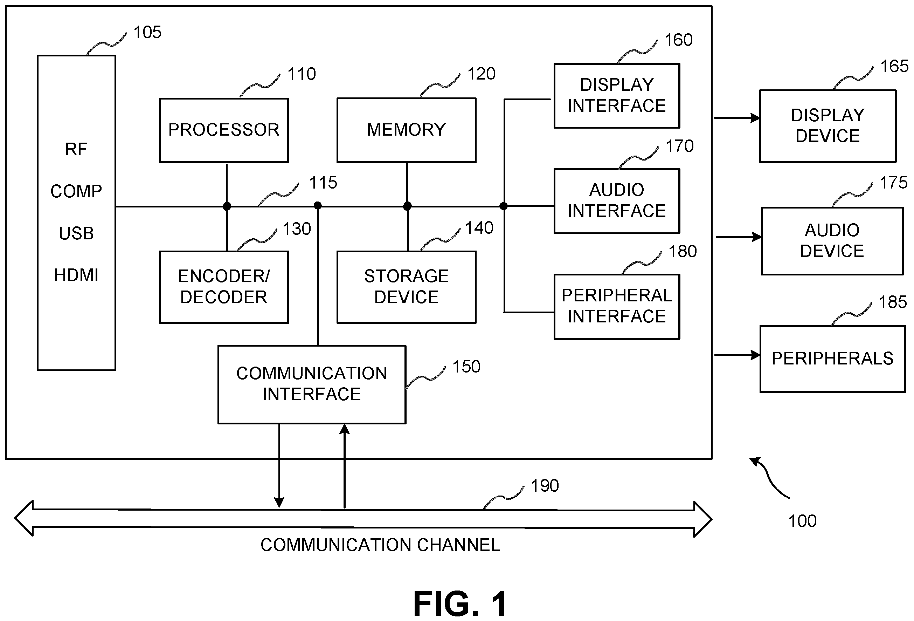

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

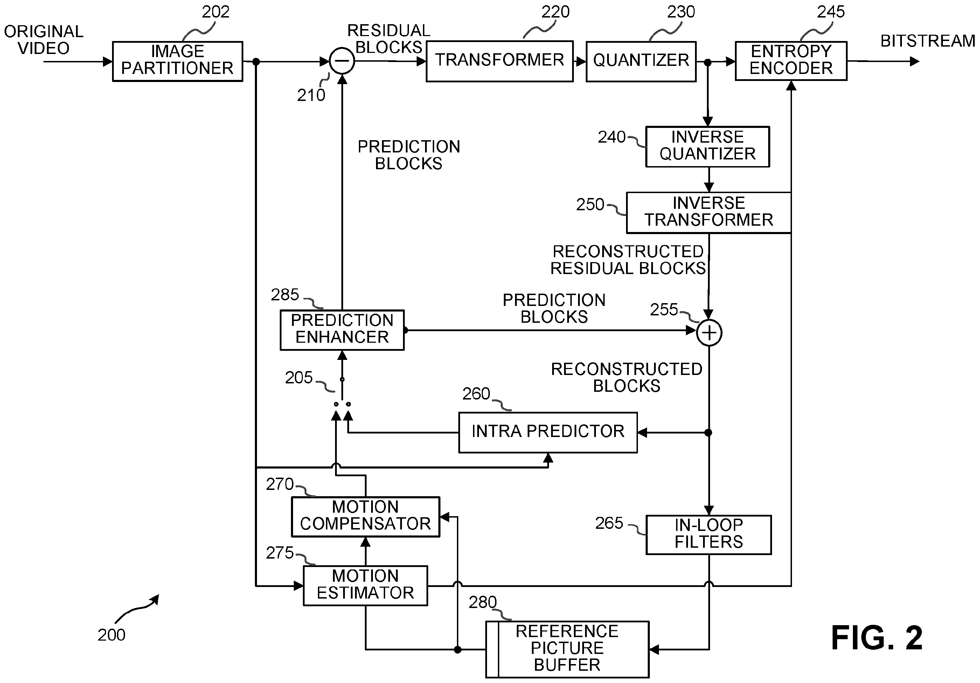

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

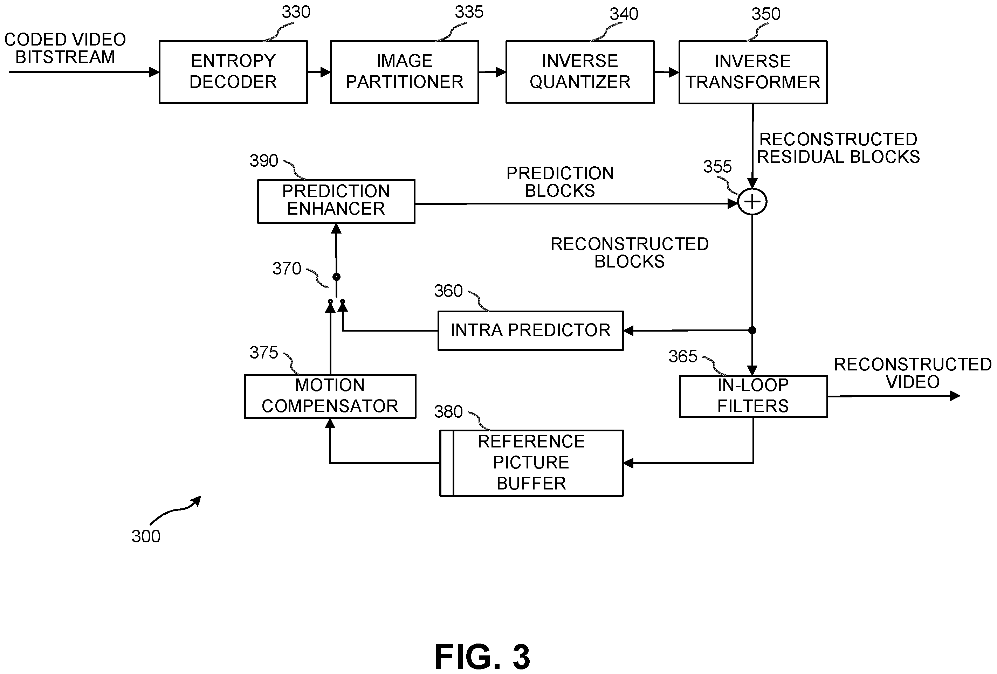

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y*, and chroma components, *U* and *V* (also denoted herein by *C*, *Cb, Cr*)*.*

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Systems, methods, and instrumentalities are disclosed for performing video coding (e.g., encoding and/or decoding) by adding energy information to a neural network post filters group characteristics supplemental enhancement information (SEI) message.

In examples, a device (e.g., a decoder for video decoding) may receive a bitstream. The device may determine a first SEI message from the bitstream. The first SEI message may indicate an NNPFG and energy information associated with the NNPFG. The device may, e.g., on a condition that the energy information satisfies criteria, decode an image by applying the NNPFG to one or more image pixel values from the bitstream. The device may send the decoded image to a display.

In examples, a device (e.g., an encoder for video encoding) may receive an image. The device may determine an NNPFG. The device may encode a bitstream with the image. The device may determine energy information associated with the NNPFG. The device may determine a first SEI message for the bitstream. The first SEI message may indicate the NNPFG characteristics and the energy information. The device may insert the first SEI message into the encoded bitstream.

The addition of energy information to a neural network post filters group characteristics SEI message may relate to the consumption of video, e.g., in terms of energy of a group of neural network post filters that may be applied at the decoder side in the context of video compression.

The addition of energy information to a neural network post filters group characteristics SEI message may be in the field of video compression, for example, to provide neural-network post-filter characteristics SEI messages and neural-network post-filter group characteristics SEI messages.

A neural-network post-filter group characteristics (NNPFGC) SEI message may specify a group of neural network post filters (NNPF).

An NNPFGC SEI message may allow an encoder to define a group of neural network post filters to be used in a series of post-processing operations, e.g., after a decoding operation.

The addition of energy information to a neural network post filters group characteristics SEI message may add metadata in a message (e.g., an NNPFGC SEI message) that may indicate the energy needed to run a group of neural network post filters. Other metadata may be added, for example, to indicate a decrease or increase, e.g., in terms of energy, which may result (e.g., be derived) from the use of the group of NNPFs. Other metadata may be added, for example, to indicate a total balance either positive or negative, e.g, in terms of energy, which may result (e.g., be derived) from the application of the group of NNPFs and use of their outputs.

Application of a neural network may utilize energy (e.g., a certain non-neglectable amount of energy). A determination may be made whether or not to apply a group of neural network post filters at the decoder, for example, based on the energy designated for the group to run on/consume.

In example, adding energy information to a neural network post filters group characteristics SEI message may provide a benefit, which may include power savings/energy reduction, for example, if a determination is made (e.g., at the decoder) to not apply the group of neural networks (e.g., because there may not be enough energy available). In some examples, a determination/decision may be made between selection/application of one group of post filters or another group of post filters, for example, based on the energy needed to run the groups of post filters.

Decisions/determinations may be returned to users, for example, to make the users aware of the energy that may be consumed to apply one or more (e.g., some) groups of post filtering processes, which may lead to decisions to not apply the group(s) of post filters.

A (e.g., another) determination may decide whether to apply a group of neural network post filters at the decoder based on the energy that may be consumed by execution/running of the group of NNPFs and/or on the energy that may be saved or lost by using the content on which the group of post filters has been applied and/or on a total balance either positive or negative, e.g, in terms of energy, which may result (e.g., be derived) from the application of the group of NNPFs and use of their outputs

In an NNPFGC SEI message, information about the complexity of applying an NNPFGC may be indicated (e.g., in terms of number of parameters, size of memory that may be utilized, and/or number of multiplication - accumulation (MAC) operations).

The indicated information (e.g., numbers related to parameters, memory size, and/or MACs) may be insufficient to indicate (e.g., give a clear view of) the total/final energy consumption to run one or more group(s) of neural networks (e.g., one group of neural networks versus another group of neural networks). The indicated information may provide information on what may be needed without indicating differentiable information on how the energy consumption may increase while running various groups of neural network post filters.

An NNPFGC SEI message may include information about the complexity of applying a group of NNPFs (e.g., in terms of the number of parameters, size of memory that may be utilized, and/or the number of MAC operations).

The number of parameters, size of memory that may be utilized, and/or the number of MAC operations may not provide a clear view of the actual energy consumption that may be needed to run a group of NNPFs and/or may not provide information on how the energy consumption may increase or decrease as a consequence of running a (e.g., given) group of neural network post filters.

Metadata (e.g., additional metadata) may provide information indicating the increase of energy that may be needed to run a (e.g., selected) group of neural network post filters.

In some examples, the saved/lost energy resulting from the application of the group of neural network post filters may be indicated. In some examples, the total energy balance may be indicated, for example, by adding the energy that may be needed to run the group of neural network post filters and the saved/lost energy resulting from the application of the group of neural network post filters.

Examples and associated descriptions herein for groups of NNPFs may be derived for/applied to groups of non-neural network post filters or groups with non-neural network and neural network post filters.

Information conveyed may correspond to the energy that may be utilized to run a group of NNPFs. For example, metadata (e.g., additional metadata) information may indicate an increase in the amount of energy that may be needed to run a (e.g., selected) group of neural network post filters.

An example of SEI message syntax to indicate energy that may be utilized to run a group of NNPFs is shown in Table 1.

**Table 1 - Example of SEI message syntax to indicate energy that may be utilized to run a group of NNPFs**

| | |
|---|---|
| nn_post_filter_group_characteristics( payloadSize) { | Descriptor |
| **nnpfgc_id** | ue(v) |
| **nnpfgc_grouping type** | ue(v) |
| if( nnpfgc_grouping_type = = 0 ∥ nnpfgc_grouping_type = = 2) | |
| **nnpfgc_purpose** | u(16) |
| **nnpfgc_num_members_minus2** | ue(v) |
| for( i = 0; i <= nnpfgc_num_members_minus2 + 1; i++) { | |
| **nnpfgc_member_id[ i ]** | ue(v) |
| if( nnpfgc_grouping type = = 1 ∥ nnpfgc_grouping_type = = 3 ) | |
| **nnpfgc_member_purpose[ i ]** | u(16) |
| } | |
| **nnpfgc_complexity_info_present_flag** | u(1) |
| if( nnpfgc_complexity_info_present_flag ) { | |
| **nnpfgc_parameter_type_idc** | u(2) |
| if( nnpfgc_parameter_type_idc != 2) | |
| **nnpfgc_log2_parameter_bit_length_minus3** | u(2) |
| **nnpfgc_num_parameters_idc** | u(6) |
| **nnpfgc_num_kmac operations_idc** | ue(v) |
| **nnpfgc_total_kilobyte_size** | ue(v) |
| **nnpfc_required energy_ratio** | u(8) |
| } | |

In some examples, metadata may indicate an absolute value of energy. For example, nnpfc_required_energy_ratio may specify an increase in the amount of energy that may be utilized to apply the group of neural network post-filters (NNPFs). The amount of energy (e.g., increase) may be coded, for example, over eight (8) bits.

In some examples, metadata may indicate a quantized value of energy (e.g., quantized nnpfc_required_energy_ratio). An example of the semantics (e.g., coded over 2 bits) is shown in Table 2.

**Table 2 - Example of indicating a quantized value of energy increase to apply a group of NNPFs**

| **nnpfc_required energy_ratio** | **Interpretation** |
|---|---|
| 0 | The required energy ratio is 5% |
| 1 | The required energy ratio is 10% |
| 2 | The required energy ratio is 20% |
| 3 | The required energy ratio is 30% |

In some examples, the percentages shown in Table 2 may correspond to an increase in terms of energy that may be utilized by the tool in charge of running the group of NNPFs (e.g., the decoder). In some examples, the percentages shown in Table 2 may correspond to the energy increase of a (e.g., bigger) system that may include the tool that runs the group of NNPFs (e.g., a set top box).

In some examples, metadata (e.g., nnpfc_required_energy_ratio) may indicate energy as a percentage. For example, the indication of energy may correspond to a percentage of energy, e.g., a comparison of the energy that may be utilized/needed with and without the post filter. The value of nnpfc_required_energy_ratio may be, for example, in a range between zero (0) and 100, which may be coded over four (4) bits. In some examples, the sizes or ranges may be different, e.g., which may variously be coded over five (5) to eight (8) bits.

In some examples, the percentage of energy may correspond to an increase in terms of energy of the tool that may run or may be in charge of running the group of NNPFs (e.g., the decoder). In some examples, the percentage of energy may correspond to the energy increase of a (e.g., bigger) system that may include the tool that may run the group of NNPFs (e.g., a set top box).

In some examples, the energy is indicated as a corresponding or equivalent number of MAC, e.g., a number of MAC that represent the same energy consumption. In some examples, the energy is indicated in another unit that corresponds to different energy levels (e.g., low level, middle level, high level), which may depend on device characteristics on which the post processing filters will be run.

In some examples, metadata information conveyed may correspond to energy saved/lost as a consequence of the use/application of the NNPF. For example, the nnpfc_required_energy_ratio may specify the amount of energy that may be gained or lost by using the content after the application of the NNPF group. For example, an NNPF group may indicate a purpose to reduce the energy consumption of the content once displayed on screen. Application of the NNPF group may enable a reduction of energy consumption (e.g., an energy gain). The semantics (e.g., for nnpfc_energy_ratio) may specify the amount of energy saved or lost by using the content after the application of the group of NNPFs.

In some examples, metadata information conveyed may indicate the value of nnpfc_energy_ratio. As described herein, the value of nnpfc_energy_ratio may be an absolute value of energy saved/lost as a consequence of applying the group of NNPFs, a quantized value of energy saved/lost as a consequence of applying the group of NNPFs, a percentage of energy saved/lost as a consequence of applying the group of NNPFs, an equivalent number of MAC, some energy levels, etc.

The value of nnpfc_energy_ratio may be associated with a sign (e.g., positive, negative). For example, the amount of energy indicated may be negative. The sign of the value or of the nnpfc_energy_ratio may be interpreted, for example, as follows: values below 128 may be considered negative; values above 128 may be considered positive; a value = 0 may correspond to a loss of energy equal to a percentage (e.g., 30% loss); a value = 255 may correspond to a gain of energy equal to a percentage (e.g., 30% gain).

In some examples, metadata (e.g., additional/extra metadata) may (e.g., be defined to) specify whether the value in the nnpfc_energy_ratio may be considered as a loss or a gain.

A flag (e.g., nnpfc energy_ratio sgn flag) may specify, for example, if the value of nnpfc_energy_ratio may be considered as negative or positive. The use of the group of NNPFs may result in a gain in terms of energy, for example, if nnpfc energy_ratio sgn flag equals zero (0). The use of the group of NNPFs may result in a loss in terms of energy, for example, if nnpfc_energy_ratio_sgn_flag equals one (1).

In some examples, information conveyed may correspond to the final/total energy balance that may be induced by the application/use of the NNPF(s). The nnpfc_required_energy_ratio may specify the absolute balance in terms of energy, for example, by considering the energy that may be consumed while applying the group of NNPFs and the energy that may be saved or lost while using the content, e.g., consequently to the application of the group of NNPFs.

The semantics may include a specification (e.g., by nnpfc_energy_ratio) of the balance in terms of energy, for example, by considering the energy that may be consumed while applying the group of NNPFs and the energy that may be saved or lost while using the content, e.g., consequently to the application of the group of NNPFs.

An indication may provide the value (e.g., and sign) of nnpfc_energy_ratio. As described herein, the value of nnpfc_energy_ratio may be an absolute value of the final energy balance induced by applying the group of NNPFs, a quantized value of the final energy balance induced by applying the group of NNPFs, a percentage of the final energy balance induced by applying the group of NNPFs, an equivalent number of MAC, some energy levels, etc. A flag may indicate the sign of nnpfc_energy_ratio to indicate a gain or loss of the final energy balance.

The syntax shown by example in Table 1 may be modified for one or more implementations, for example, as shown in Table 3. The flag for the sign of the energy value may be optional in various implementations.

**Table 3 - Example of SEI message syntax to indicate energy that may be saved/lost and/or a final energy balance that may be induced based on application of a group of NNPFs**

| | |
|---|---|
| nn_post_filter_group_characteristics( payloadSize) { | Descriptor |
| **nnpfgc_id** | ue(v) |
| **nnpfgc_grouping type** | ue(v) |
| if( nnpfgc_grouping_type = = 0 ∥ nnpfgc_grouping_type = = 2) | |
| **nnpfgc_purpose** | u(16) |
| **nnpfgc_num_members_minus2** | ue(v) |
| for( i = 0; i <= nnpfgc_num_members_minus2 + 1; i++) { | |
| **nnpfgc_member_id[ i ]** | ue(v) |
| if( nnpfgc_grouping type = = 1 ∥ nnpfgc_grouping_type = = 3 ) | |
| **nnpfgc_member_purpose[ i ]** | u(16) |
| } | |
| **nnpfgc_complexity_info_present_flag** | u(1) |
| if( nnpfgc_complexity_info_present_flag ) { | |
| **nnpfgc_parameter_type_idc** | u(2) |
| if( nnpfgc_parameter_type_idc != 2 ) | |
| **nnpfgc_log2_parameter_bit_length_minus3** | u(2) |
| **nnpfgc_num_parameters_idc** | u(6) |
| **nnpfgc_num_kmac operations_idc** | ue(v) |
| **nnpfgc_total_kilobyte_size** | ue(v) |
| **nnpfc_energy_ratio_sign_flag** | u(1) |
| **nnpfc_energy_ratio** | u(8) |
| | |
| } | |

Examples described herein may be modified or mixed/combined. For example, in some implementations, information conveyed may correspond to the energy that may be utilized (e.g., required) to run the group of NNPFs and the energy that may be induced by the use of the group of NNPFs. An example of the syntax is shown in Table 4.

**Table 4 - Example of SEI message syntax to indicate energy that may be utilized to run a group of NNPFs and/or a final energy balance that may be induced based on application of a group of NNPFs**

| | |
|---|---|
| nn_post_filter_group_characteristics( payloadSize) { | Descriptor |
| **nnpfgc_id** | ue(v) |
| **nnpfgc_grouping type** | ue(v) |
| if( nnpfgc_grouping_type = = 0 ∥ nnpfgc_grouping_type = = 2) | |
| **nnpfgc_purpose** | u(16) |
| **nnpfgc_num_members_minus2** | ue(v) |
| for( i = 0; i <= nnpfgc_num_members_minus2 + 1; i++) { | |
| **nnpfgc_member_id[ i ]** | ue(v) |
| if( nnpfgc_grouping type = = 1 ∥ nnpfgc_grouping_type = = 3 ) | |
| **nnpfgc_member_purpose[ i ]** | u(16) |
| } | |
| **nnpfgc_complexity_info_present_flag** | u(1) |
| if( nnpfgc_complexity_info_present_flag ) { | |
| **nnpfgc_parameter_type_idc** | u(2) |
| if( nnpfgc_parameter_type_idc != 2) | |
| **nnpfgc_log2_parameter_bit_length_minus3** | u(2) |
| **nnpfgc_num_parameters_idc** | u(6) |
| **nnpfgc_num_kmac operations_idc** | ue(v) |
| **nnpfgc_total_kilobyte_size** | ue(v) |
| **nnpfc_required energy_ratio** | u(8) |
| **nnpfc_energy_ratio_sign_flag** | u(1) |
| **nnpfc_energy_ratio** | u(8) |
| | |
| } | |

In some examples, a flag (e.g., an additional flag) may indicate the presence of energy information, which may be applicable to examples (e.g., as described herein).

An example of syntax for a flag (e.g., an additional flag) indicating a presence of energy information is shown in Table 5.

**Table 5 - example of syntax for a flag indicating a presence of energy information**

| | |
|---|---|
| nn_post_filter_group_characteristics( payloadSize) { | Descriptor |
| **nnpfgc_id** | ue(v) |
| **nnpfgc_grouping type** | ue(v) |
| if( nnpfgc_grouping_type = = 0 ∥ nnpfgc_grouping_type = = 2) | |
| **nnpfgc_purpose** | u(16) |
| **nnpfgc_num_members_minus2** | ue(v) |
| for( i = 0; i <= nnpfgc_num_members_minus2 + 1; i++) { | |
| **nnpfgc_member_id[ i ]** | ue(v) |
| if( nnpfgc_grouping type = = 1 ∥ nnpfgc_grouping_type = = 3 ) | |
| **nnpfgc_member_purpose[ i ]** | u(16) |
| } | |
| nnpfgc_complexity_info_present_flag | u(1) |
| if( nnpfgc_complexity_info_present_flag ) { | |
| **nnpfgc_parameter_type_idc** | u(2) |
| if( nnpfgc_parameter_type_idc != 2) | |
| **nnpfgc_log2_parameter_bit_length_minus3** | u(2) |
| **nnpfgc_num_parameters_idc** | u(6) |
| **nnpfgc_num_kmac operations_idc** | ue(v) |
| **nnpfgc_total_kilobyte_size** | ue(v) |
| **nnpfgc_energy_info_present_flag** | u(1) |
| if( nnpfgc_energy_info_present_flag ) { | |
| **nnpfc_required energy_ratio** | u(8) |
| **nnpfc_energy_ratio_sign_flag** | u(1) |
| **nnpfc_energy_ratio** | u(8) |
| | |
| } | |

As shown by example in Table 5, a flag indicating presence of energy information may be nnpfgc energy_info_present flag. A value of nnpfgc_energy_info_present_flag equal to one (1) may specify, for example, that one or more syntax elements that indicate information related to the energy that may be utilized/required to run the group of NNPFs and/or the energy that may be derived from using the content on which the group of NNPFs was applied are present. A value of nnpfc_energy_info_present_flag equal to zero (0) may specify, for example, that syntax elements that may indicate the energy that may be utilized/required to run the group of NNPFs and/or the energy that may be derived from using the content on which the group of NNPFs was applied are not present.

In some examples, nnpfgc energy_info_present flag may be equal to zero (0), such as if/when nnpfgc_grouping_type is equal to one (1).

The encoder side may determine (e.g., calculate, estimate) and signal energy information that may be used at the decoder side. For example, the encoder side may determine (e.g., calculate or estimate) one or more of the following information related to: how much energy may be utilized/needed to run the group of NNPFs, how much energy savings or increase may be obtained as a consequence of running the group of NNPFs, and/or how much energy balance may be obtained after running the group of NNPFs and using the results. The encoder side may make the determination(s), for example, by looping and accumulating the energy information of each NNPF in a group. The encoder side may insert the (e.g., accumulated) information in a message (e.g., an NNPFGC SEI message), which, in turn, may be inserted in the bitstream (e.g., to one or more decoders).

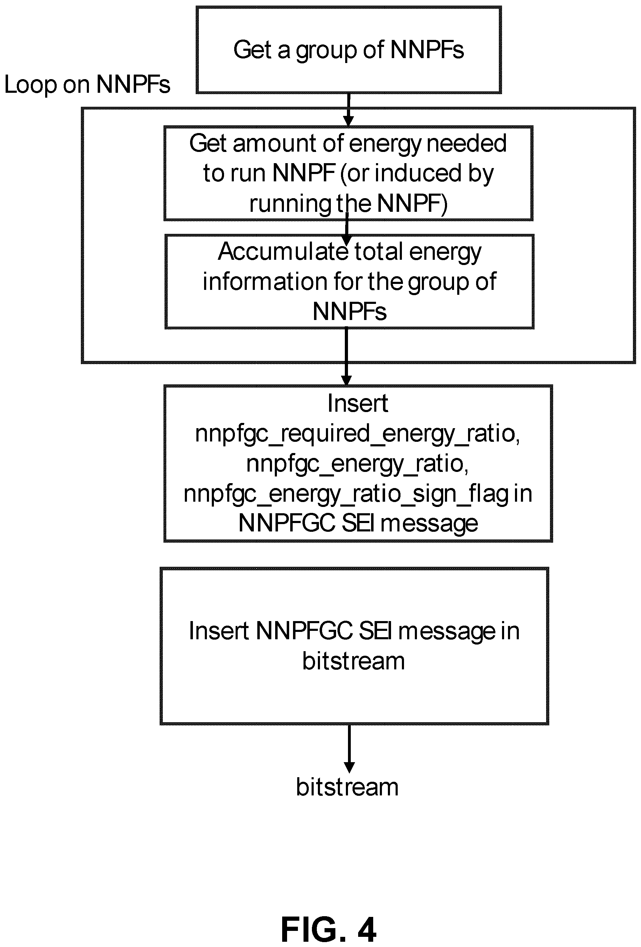

FIG. 4 illustrates an example of an implementation at the encoder side to determine energy information related to a group of NNPFs and insert the determined energy information in an NNPFGC SEI message in a bitstream.

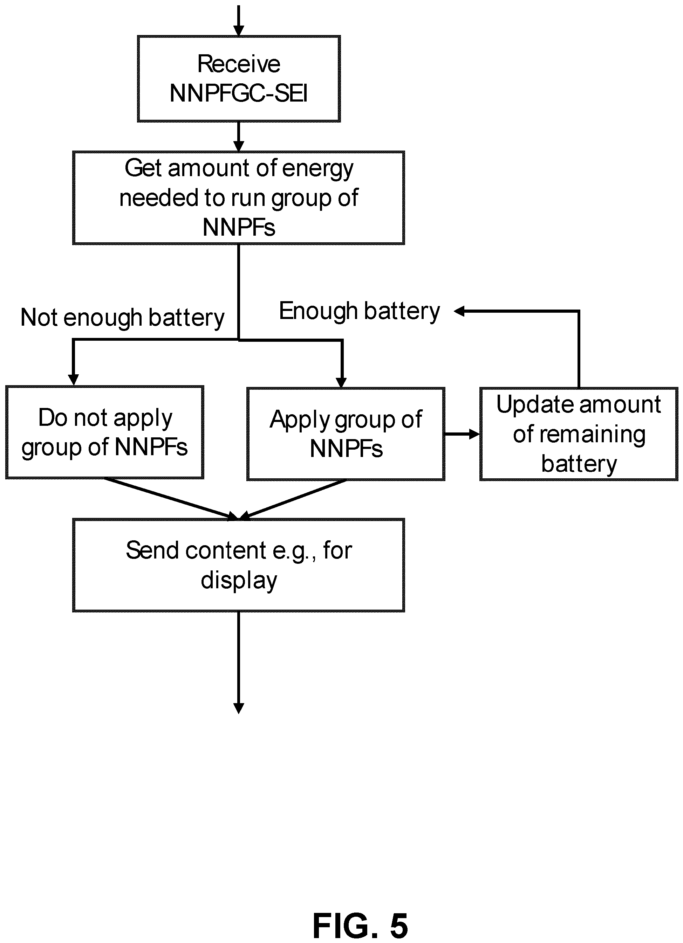

FIG. 5 illustrates an example of an implementation at the decoder side to receive energy information associated with application of a group of NNPFs in an NNPFGC SEI message in a bitstream and to utilize the energy information to determine whether to apply the group of NNPFs. As shown in FIG. 5, at the decoder side, the NNPFGC SEI message may be received. The corresponding energy information may be retrieved from the SEI message (e.g., the amount of energy required to run the group of NNPFs, the energy increase or decrease as a consequence of running the group, and/or the total energy balance). A determination may be made whether to apply the group of NNPFs, for example, depending on whether the amount of energy that may be utilized/required to apply the group of NNPFs is lower than the remaining available battery. In some examples (e.g., for a battery powered device), the amount of available energy in the battery (e.g., battery power or battery life) may be updated, for example, if a determination is made to apply the group of NNPFs. The content (e.g., an image), for example, with or without the application of the group of NNPFs depending on the determination to apply the group of NNPFs, may be sent, for example, to the display.

In some examples (e.g., in case of insufficient battery power), a determination may be made (e.g., at the decoder side) based on (e.g., individual) information of energy utilization (e.g., required energy), energy as a consequence of the application of NNPF(s), and/or total energy balance for one or more NNPFs (e.g., if available). For example, a determination to apply one or more (e.g., some) of the NNPFs, may select one or more NNPFs for application in an order in the group of NNPFs, or by selecting NNPFs that consume less energy, or by selecting the NNPF(s) that may have a higher energy balance, or by selecting the NNPF(s) according to a level of priority (e.g., of NNPF application), or by selecting NNPFs in order to maximize the number of NNPFs that it may be possible to apply (e.g., starting with NNPFs that utilize/require less energy), or by selecting NNPFs) according to a combination of priority and energy, or upon another selection criterion.

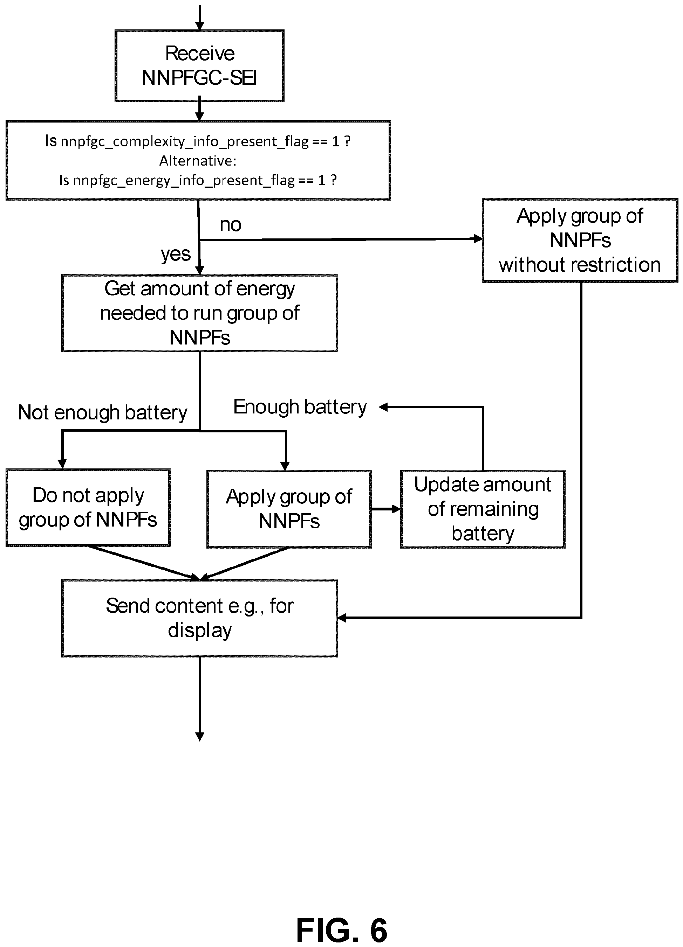

FIG. 6 illustrates an example of an implementation at the decoder side to receive energy information associated with application of a group of NNPFs in an NNPFGC SEI message in a bitstream and to utilize the energy information to determine whether to apply the group of NNPFs. In some examples (e.g., as shown in FIG. 6), the process may (e.g., after receiving the NNPFGC SEI) check whether a flag (e.g., nnpfgc complexity_info_present flag) is set (e.g., to one (1)) before checking the available energy level and determining whether to apply the group of NNPFs. In some (e.g., alternative) examples, the process may check whether the nnpfgc energy_info_present flag is set (e.g., to one (1)). In some (e.g., alternative) examples (e.g., if the flag(s) is(are) not present), a determination may decide not to apply the group of NNPFs, or to apply (e.g., only) one or more (e.g., some, not all) of the NNPFs, for example, depending on the individual energy information (e.g., if available) for each of the NNPFs in the group of NNPFs.

In some examples, a decision to apply the group of NNPFs may (e.g., also) be conditioned on one or more conditions, such as the amount of energy that may be needed to process one or more (e.g., some) other processes and/or the amount of energy that may be needed by one or more (e.g., some) other tool(s) at the decoder side.

In some examples (e.g., if/when the nnpfgc_required_energy_ratio may include a percentage of increase of energy corresponding to the use of the group of NNPFs), a conversion may be performed, e.g., after decoding the metadata. For example, a received/decoded percentage of increase of energy corresponding to the use of the group of NNPFs may be converted into an amount of energy that may be compared to the remaining state of the battery. The current level of energy drawn from the battery may be used to compute a correspondence between the percentage and the actual energy that may be needed.

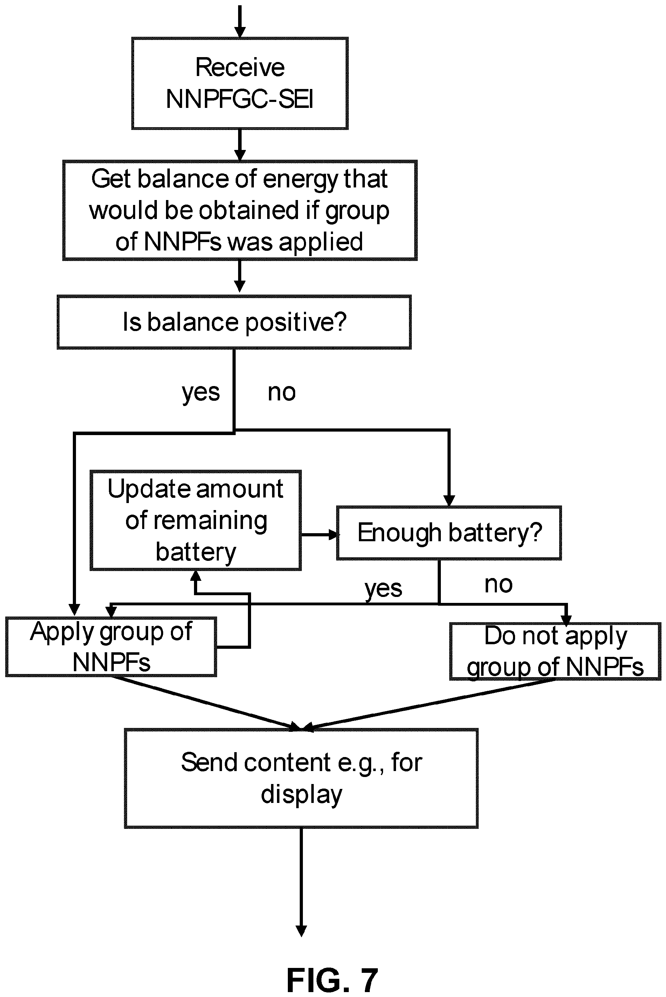

FIG. 7 illustrates an example of an implementation at the decoder side to receive energy information associated with application of a group of NNPFs in an NNPFGC SEI message in a bitstream and to utilize the energy information to determine whether to apply the group of NNPFs. FIG. 7 shows an example where the nnpfgc_energy_ratio may be used to specify the potential (e.g, total) gain or loss in terms of energy while using the content on which the group of NNPFs may be applied.

As shown in FIG. 7, at the decoder side, the NNPFGC SEI message may be received. The corresponding nnpfgc_energy_ratio metadata may be decoded corresponding to the balance of energy obtained after applying the group of NNPFs and using the modified content. If the balance is positive, the group of NNPFs may be applied, which may result in an absolute gain in energy. If the balance is negative, a determination is made to check whether enough battery power is available. If there is enough battery power, the group of NNPFs may be applied. If there is not enough battery power available, the content may be sent (e.g., directly), for example, to a display screen or one or more (e.g., some) of the NNPFs in the group may be applied, for example, depending on one or more (e.g., some) criteria, e.g., which may be applied if individual energy information is available for the NNPFs. The level of battery may be updated, for example, after each determination to apply an NNPF and/or after each application of each NNPF.

A decision to apply a group of NNPFs or not (e.g., as described in examples herein) may be performed, for example, depending on one or more (e.g., additional and/or alternative) criteria, e.g., other than the amount of battery power available. For example, a decision may be (e.g., additionally and/or alternatively) based on one or more (e.g., some) system-based thresholds.

A decision to apply a group of NNPFs or not (e.g., as described in examples herein) may (e.g., additionally and/or alternatively) be based on, for example, a user profile that may include an energy threshold (e.g., above which the user may not want to go). For example, a user may be watching a content on a TV screen. The user may have a user profile with a defined maximum energy threshold. The (e.g., entire) group of NNPFs may not be applied, for example, if the application of the (e.g., entire) group of NNPFs is determined to result in energy consumption higher than the threshold.

The addition of energy information to an NNPF group characteristics SEI message at the encoder side for processing at the decoder side may involve video coding/decoding, distribution, and/or consumption.

The addition of energy information to an NNPF group characteristics SEI message at the encoder side for processing at the decoder side may impact the encoder and the decoder.

The presence of an NNPFGC SEI message with metadata related to energy that may be utilized/needed by the NNPFs may impact the bitstream between the encoder and decoder sides.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, which can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A video decoder device, the video decoder device comprising:
a processor configured to:
receive a bitstream;
determine a message from the bitstream, wherein the message indicates characteristics of a neural network post filter group (NNPFG) and energy information associated with the NNPFG; and
on a condition that the energy information satisfies criteria, decode an image by applying one or more neural network post filter from the NNPFG to one or more image pixel values from the bitstream.

2. The video decoder device of claim 1, wherein the energy information indicates an amount of energy associated with running the NNPFG.

3. The video decoder device of any one of claims 1 to 2, wherein the energy information further indicates an amount of energy associated with the use of the decoded image after the application of the NNPFG.

4. The video decoder device of any one of claims 1 to 3, wherein the energy information further indicates an amount of energy that is the sum of the energy to be used for running the NNPFG and using the decoded image after the application of the NNPFG.

5. The video decoder device of any one of claims 1 to 4, wherein the message further indicates a presence of the energy information.

6. The video decoder device of any one of claims 1 to 5, wherein the energy information indicates at least one of an energy ratio, an absolute value of energy, a required energy ratio, a percentage of energy, an equivalent number of MAC, or an energy level.

7. A video encoder device, the video encoder device comprising:
a processor configured to:
receive an image;
determine a neural network post filter group (NNPFG);
encode a bitstream with the image;
determine energy information associated with the NNPFG;
determine a message for the bitstream, wherein the message indicates the NNPFG characteristics and the energy information; and
insert the message into the encoded bitstream.

8. The video encoder device of claim 7, wherein the energy information indicates an amount of energy associated with running the NNPFG.

9. The video encoder device of any one of claims 7 to 8, wherein the energy information further indicates an amount of energy associated with the use of the decoded image after the application of the NNPFG.

10. The video encoder device of any one of claims 7 to 9, wherein the energy information further indicates an amount of energy that is the sum of the energy to be used for running the NNPFG and to be used for using the decoded image after the application of the NNPFG.

11. The video encoder device of any one of claims 7 to10, wherein the message further indicates a presence of the energy information.

12. The video encoder device of any one of claims 7 to 11, wherein the energy information indicates at least one of an energy ratio, an absolute value of energy, a required energy ratio, a percentage of energy, an equivalent number of MAC, or an energy level.

13. A video decoding method, comprising:
obtaining a message from video data, wherein the message indicates characteristics of a neural network post filter group (NNPFG) and energy information associated with the NNPFG;
reconstructing one or more image pixel values from the video data; and
on a condition that the energy information satisfies criteria, applying one or more neural network filter of the NNPFG to one or more image pixel values.

14. The method of claim 13, wherein the energy information is configured to indicate an amount of energy associated with running the NNPFG.

15. The method of claim 13 or 14, wherein the energy information further indicates an amount of energy associated with the use of the decoded image after the application of the NNPFG.
